# EUROPEAN PATENT SPECIFICATION

(11) **EP 2 858 839 B1**
(45) Date of publication and mention of the grant of the patent: **12.12.2018**
(21) Application number: 12878408.9
(22) Date of filing: 07.06.2012
(51) Int. Cl.: B60G 11/40, B60G 5/053, F16F 1/387

(54) **RUBBER SPRING ARRANGEMENT FOR A VEHICLE AXLE SUSPENSION**
GUMMIFEDERANORDNUNG FÜR EINE FAHRZEUGACHSAUFHÄNGUNG
AGENCEMENT DE RESSORTS EN CAOUTCHOUC POUR SUSPENSION D'ESSIEU DE VÉHICULE

(43) Date of publication of application: 15.04.2015
(73) Proprietor: Volvo Lastvagnar AB, 405 08 Göteborg (SE)
(72) Inventor: HEDLUND, Lars, S-517 37 Bollebygd (SE)
(74) Representative: Volvo Technology Corporation
(86) International application number: PCT/SE2012/000088
(87) International publication number: WO 2013/184044

(56) References cited:
- WO-A1-2007/004949
- WO-A1-2007/004949
- FR-A1- 2 791 609
- US-A- 2 400 199
- US-A- 2 705 152
- US-A- 2 705 152
- US-A- 2 982 536
- US-A- 5 114 178
- US-A- 5 114 178

## Description

### TECHNICAL FIELD

The present invention relates to a vehicle wheel axle suspension having a first wheel pair side and a second wheel pair side. The vehicle wheel axle suspension comprises a first wheel axle casing and a second wheel axle casing, where the wheel axle casings extend between the wheel pair sides. At each wheel pair side there is a leaf spring, extending between the wheel axle casings, and at least one rubber spring being a part of a wheel axle casing rubber spring pair. Each leaf spring has a first end, a second end, a middle part, an inner longitudinal side and an outer longitudinal side. Each rubber spring is arranged to provide suspension between the corresponding wheel axle casing and the corresponding leaf spring end.

### BACKGROUND

Many large vehicles may have a leaf spring suspension at the rear wheel axles in case of a boogie arrangement. In order to provide an enhanced damping and comfort, a rubber spring is provided between the ends of each leaf spring and each rear axle such that the leaf springs are connected to the wheel axles by means of the rubber springs. The rubber springs absorb energy in a z-direction that is perpendicular to an x-direction that extends in the longitudinal extension of the vehicle. A y-direction is defined in a lateral extension of the vehicle, being perpendicular to both the x-direction and the z-direction. Hence the rubber springs will absorb movements up and down while travelling.

Each rubber spring comprises a rubber pillar attached at one end to a mounting plate fixed to a wheel axle casing and at the opposite end to a mounting member for housing an end of a spring leaf of a leaf spring suspension.

The rubber springs are themselves not able to handle movements in the plane of the x- and y-directions. In order to handle such movements, a V-shaped stay is arranged for each wheel axle. Each V-shaped stay comprises two stay parts, where each stay part extends between the center of a wheel axle and the vehicle chassis such that an angle is produced between each stay and the x-direction. The V-shaped stays are thus arranged to handle movements in the plane of the x- and y-directions, i.e. movements more or less perpendicular to the z-direction. Such an arrangement is for example disclosed in WO 2007/004949.

This arrangement provides enhanced damping and comfort, but it is desired that even more advantages are added. If a wheel of a vehicle runs over a protrusion such as a rock, the corresponding axle turns and rolls around a roll center. The roll center of each axle will have such a placement that the wheel will present a lateral movement when such a roll occurs, and this reduces the desired friction force in the x-direction. This may in turn cause reduced traction and agility.

US 2,705,152 relates to a vehicle tandem axle spring suspension. The spring suspension comprises a leaf spring arrangement arranged between a pair of wheels in the longitudinal direction of the vehicle. The leaf spring is connected to the axle of the respective wheels by means of an axel bracket, where the leaf spring is arranged to rest on an upper face of the axle bracket.

US 5,114,178 relates to a suspension assembly for vehicles. The suspension comprises a housing with a section arranged to telescope within the housing. The suspension also comprises a spring means arranged to absorb energy shocks from the frame member of the vehicle.

It is therefore desirable to provide a rubber spring for a vehicle wheel axle suspension, where the roll center is lowered.

### SUMMARY

It is an object of the present invention to provide a rubber spring for a vehicle wheel axle suspension, where the roll center may be lowered at the same time as said enhanced damping and comfort is maintained.

This object is achieved by means of a vehicle wheel axle suspension having a first wheel pair side and a second wheel pair side. The vehicle wheel axle suspension comprises a first wheel axle casing and a second wheel axle casing, where the wheel axle casings extend between the wheel pair sides. At each wheel pair side there is a leaf spring, extending between the wheel axle casings, and at least one rubber spring being a part of a wheel axle casing rubber spring pair. Each leaf spring has a first end, a second end, a middle part, an inner longitudinal side and an outer longitudinal side. Each rubber spring is arranged to provide suspension between the corresponding wheel axle casing and the corresponding leaf spring end.

Furthermore, the vehicle wheel axle suspension comprises at least one wall arrangement for at least one wheel axle casing rubber spring pair. Each wall arrangement comprises a first wall and a second wall, where each wall is attached to a corresponding wheel axle casing. Each wall has main sides with longitudinal extensions parallel to the leaf springs' longitudinal sides and running between a corresponding wheel axle casing and a corresponding leaf spring such that a main side of each wall faces a corresponding leaf spring longitudinal side.

According to an example, there is a first rubber spring and a second rubber spring at each wheel pair side.

According to another example, the vehicle wheel axle suspension comprises a first longitudinal stay and a second longitudinal stay. The first longitudinal stay runs between the first wheel axle and a beam arrangement positioned between, and running parallel with, the wheel axle casings. The second longitudinal stay runs between the second wheel axle casing and the beam arrangement. The longitudinal stays are attached at opposite sides of the beam arrangement, each longitudinal stay being attached in its ends by means of suitable joints that allow pivoting movements.

According to another example, each wall arrangement is arranged at a corresponding wheel axle casing rubber spring pair. In this way, each first wall and each second wall runs on an outer side or an inner side of different rubber springs in said wheel axle casing rubber spring pair.

According to another example, each wall arrangement is arranged at a corresponding rubber spring such that each first wall and each second wall run on opposite sides of both the corresponding rubber spring and the leaf spring's corresponding end.

Other examples are disclosed in the dependent claims.

A number of advantages are provided by means of the present invention. For example, the the V-shapes stays used previously may be replaced with the longitudinal stays, which results in that the roll center is lowered. This is advantageous since the desired friction force will be enhanced if a wheel of a vehicle runs over a protrusion such as a rock.

### BREIF DESCRIPTION OF THE DRAWINGS

The present invention will now be described more in detail with reference to the appended drawings, where
- Figure 1: schematically shows a side view of a truck;
- Figure 2: schematically shows a side view of a vehicle wheel axle suspension;
- Figure 3: schematically shows a rear view of a right-hand side part of a vehicle wheel axle suspension;
- Figure 4: schematically shows a top view of a right-hand side part of a vehicle wheel axle suspension; and
- Figure 5: schematically shows a rear view of a back part of a vehicle wheel axle suspension.

### DETAILED DESCRIPTION

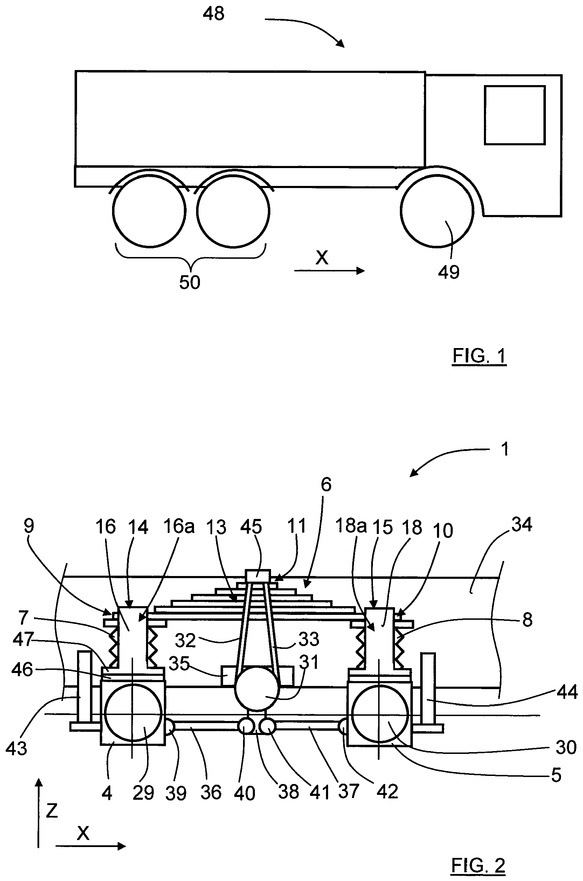

With reference to Figure 1, a side view of a truck 48 is shown. At front, there a single wheel pair 49, and at the rear there is a boogie arrangement 50 comprising two wheel pairs. In the following, a vehicle wheel axle suspension for the boogie arrangement 50 will be discussed.

With reference to Figure 2, Figure 3 and Figure 4, a corresponding side view, rear view and top view of a vehicle wheel axle suspension 1 at one side is shown. Due to symmetry, roughly only one side is shown in the Figures, which is indicated by a symmetry line S.

All Figures are of a simplified character, only schematically showing some of the elements of a vehicle wheel axle suspension in order to provide sufficient and clear illustrations. In the Figures, there is an x-direction that extends in the longitudinal extension of the vehicle, in its forward moving direction, and a z-direction that is perpendicular to the x-direction and runs vertically. A y-direction is defined in a lateral extension of the vehicle, being perpendicular to both the x-direction and the z-direction.

The vehicle wheel axle suspension 1 comprises a first wheel axle casing 4 and a second wheel axle casing 5 at which ends corresponding wheel drums 29, 30 are attached. The vehicle wheel axle suspension 1 comprises a leaf spring 6 which is attached to a cradle 31 by means of leaf spring holders 32, 33. The cradle 31 is in turn connected to a longitudinal beam 34 by means of an attachment member 35. The leaf spring 6 has a first end 9, a second end 10, and a middle part 11, the leaf spring holders 32, 33 running to the cradle 31 from the middle part 11 where they are attached to a holder 45.

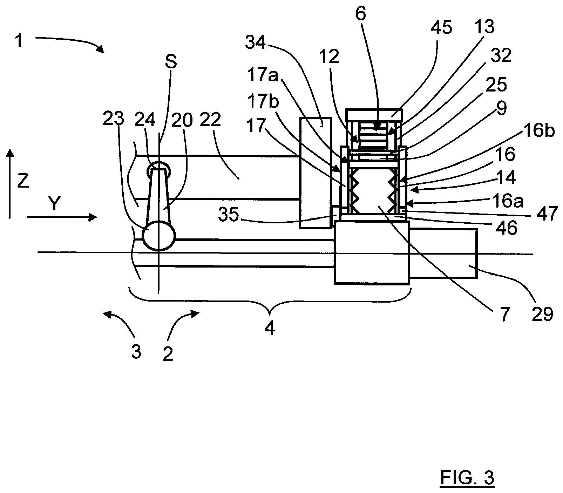

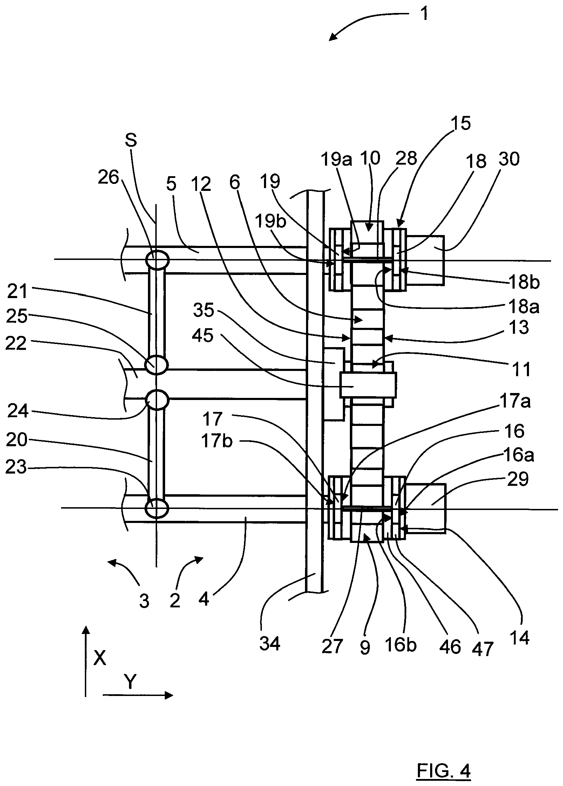

From the cradle 31, reaction rods 36, 37 extend toward the wheel axle casings 4, 5 via a bogie anchorage 38 at the cradle 31, the reactions rods 36, 37 being attached at their ends by means of suitable joints 39, 40, 41, 42. At the other sides of the wheel axle casings 4, 5, shock absorbers 43, 44 are attached and extend to the longitudinal beam 34 where they also are attached. The shock absorbers 43, 44 are only shown in Figure 2; in Figure 3 and Figure 4 they are omitted for reasons of clarity.

A first end of a first rubber spring 7 is attached to the first wheel axle casing 4 and a first end of a second rubber spring 8 is attached to the second wheel axle casing 5. The respective second ends of the first rubber spring 7 and the second rubber spring 8 rest against the respective leaf spring's first end 9 and leaf spring's second end 10. The rubber springs are 7, 8, as mentioned initially, used to provide an enhanced damping and comfort.

According to the present invention, the vehicle wheel axle suspension 1 comprises a first wall arrangement 14 and a second wall arrangement 15. The first wall arrangement 14 is arranged at the first rubber spring 7 such that a first wall 16 and a second wall 17 run in the z-direction on each side of the first rubber spring 7 and on each side of the leaf spring's first end 9. The first wall arrangement 14 is attached to the first wheel axle casing 4 via a plate 46 which constitutes the first end of the first rubber spring 7. For this purpose, the first wall arrangement 14 comprises feet 47, at which for example bolts may be attached, through the plate 46 and into the first wheel axle casing 4. For reasons of clarity, the plate 46 and feet 47 are only indicated at one position in the Figures.

The first wall arrangement also comprises a top pin 27 that runs between the walls 16, 17 above the leaf spring's first end 9, such that a maximum distance between the leaf spring's first end 9 and the first wheel axle casing 4 is obtained.

The second wall arrangement 15 is arranged at the second rubber spring 8 in a similar way; the second wall arrangement 15 also comprising a first wall 18 and a second wall 19 running on each side of the second rubber spring 8 and the leaf spring's second end 10, the walls 18, 19 being attached to the second wheel axle casing 5. In a similar way, the second wall arrangement 15 also comprises a top pin 28 that runs between the walls 18, 19 above the leaf spring's second end 10 such that a maximum distance between the leaf spring's second end 10 and the second wheel axle casing 5 is obtained. The top pins 27, 28 thus run on the sides of the leaf springs' ends 9, 10 that face away from the rubber springs 7, 8.

Preferably, but now shown in the Figures, similar wall arrangements are provided at the other ends 3 of the wheel axle casings 4, 5 as well. All wall arrangements present at the vehicle wheel axle suspension 1 are attached in a similar manner.

Generally, for each side 2, 3, each wall 16, 17; 18, 19 have main sides 16a, 16b, 17a, 17b; 18a, 18b, 19a, 19b with longitudinal extensions parallel to the leaf springs' longitudinal sides 12, 13 and running between a corresponding wheel axle casing 4, 5 and the leaf spring 6) such that a main side 16a, 16b, 17a, 17b; 18a, 18b, 19a, 19b of each wall 16, 17; 18, 19 faces a corresponding leaf spring longitudinal side 12, 13.

By means of the wall arrangements 14, 15, lateral forces that mainly act in the y-direction are absorbed by the contact between walls 16, 17; 18, 19 of the wall arrangements and the leaf springs' longitudinal sides 12, 13, these forces thus not acting on the rubber springs 7, 8. In order to spare the rubber springs 7, 8 from such forces as much as possible, the walls 16, 17; 18, 19 of each wall arrangement 14, 15 should run close to the leaf spring 6 while a sliding engagement is maintained in the z-direction between the walls 16, 17; 18, 19 and the leaf spring 6.

Further, in accordance with the present invention, the vehicle wheel axle suspension comprises a first longitudinal stay 20 and a second longitudinal stay 21. The first longitudinal stay 20 runs between the first wheel axle casing 4 and a beam arrangement 22 positioned between, and running parallel with, the wheel axle casings 4, 5. The second longitudinal stay 21 runs between the second wheel axle casing 5 and the beam arrangement 22, the longitudinal stays 20, 21 being attached at opposite sides of the beam arrangement 22. Each longitudinal stay 20, 21 is attached in its ends by means of suitable joints 23, 24; 25, 26 that allow pivoting movements. The joints 23, 26 positioned at the wheel axle casings preferably allow pivoting movements laterally, mainly in a plane defined by the x-direction and the y-direction, and the joints 24, 25 positioned at the beam arrangement 22 preferably allow pivoting movements mainly vertically in a plane defined by the x-direction and the z-direction.

However, since the longitudinal stays 20, 21 may be attached at different vertical positions, they may be more or less inclined with respect to the plane defined by the x-direction and the y-direction such that the joints 23, 26 positioned at the wheel axle casings 4, 5 allow pivoting movements in a plane that is equally inclined with respect to the plane defined by the x-direction and the y-direction. In Figure 3, an example is showed where the first longitudinal stay 20 is shown running from the first wheel axle casing's joint 23 to the corresponding beam arrangement's joint 24

The longitudinal stays 20, 21 are suitably positioned at the middle of the corresponding wheel axle casings 4, 5 and run in the x-direction, and possibly, due to said possible inclination, also in the z-direction, but not in the y-direction.

Thus, by means of the wall arrangements 14, 15, the V-shapes stays used previously may be replaced with the longitudinal stays 20, 21 described above.

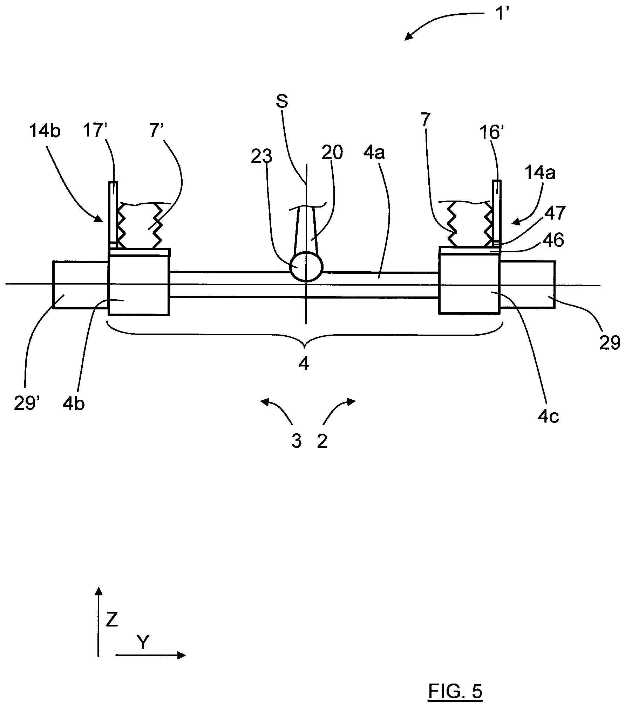

An example of another type of wall arrangement is shown in Figure 5, which is a very simplified view of the first wheel axle casing 4, mainly corresponding to Figure 3. Here, the first wheel axle 4 of the vehicle wheel axle suspension 1' is shown in its entirety in order to explain this example, the wheel drums 29, 29' being mounted at the wheel axle casing's ends. At the first side 2 there is a first rubber spring 7 and at the second side 3 there is a second rubber spring 7'. These rubber springs 7, 7' constitute a wheel axle casing rubber spring pair, and although not shown in the previous Figures, such wheel axle casing rubber spring pairs are present there as well.

Here, a wall arrangement is divided into a first part 14a and a second part 14b, the first part being mounted at the first side 2 and the second part 14b being mounted at the second side 3. The first part comprises a first wall 16' and the second part 14b comprises a second wall 17'. The first wall 16' and the second wall 17' runs on the outer side of the rubber springs 7, 7' in said wheel axle casing rubber spring pair. The walls could alternatively be running on the inner side of the rubber springs 7, 7' in said wheel axle casing rubber spring pair and still obtain the same effect.

The inner side is the side facing said the symmetry line S, and the outer side is the side facing away from the symmetry line S.

Since there is only one wall per rubber spring, no top pins are used here, although it could be conceivable to have a pin or a roof part extending from each wall 16', 17' and running on top of the leaf spring's ends (not shown).

A similar arrangement may be present at the second wheel axle casing.

The present invention is not limited to the examples above, but may vary within the scope of the appended claims. For example, there may be rubber springs present only for one of the wheel axle casings 4, 5, and in that case the wall arrangement or wall arrangements are only used for the wheel axle casing where there are rubber springs. Furthermore, where there are rubber springs present for both the wheel axle casings 4, 5, it is sufficient to have at least one wall arrangement for at least one wheel axle casing rubber spring pair 7, 7'.

Furthermore, where there are wall arrangements 14, 15 of the type shown in Figure 3, these are only needed at one side 2, 3 of the wheel axle suspension 1 in order to obtain functionality, although the use of wall arrangements 14, 15 on both sides provides a higher degree of reliability. Where there are wall arrangements 14a, 14b of the type shown in Figure 5, the parts 14a, 14b in each wall arrangement are needed at both sides 2, 3 of the wheel axle suspension 1' in order to obtain functionality.

Furthermore, with reference to Figure 5, for all examples, the first wheel axle casing 4 may comprise a straight part 4a that runs in the Y-direction at which ends there is a respective larger part 4b, 4c at which the rubber springs 7, 7' are attached. In this case, the same configuration is present at the second wheel axle casing 5 as well (not shown in Figure 5). The bolts mentioned for attaching the wall arrangements then run into the respective larger part 4b, 4c where wall arrangements are present.

Many other types of wheel axle configurations and fastening arrangements of the rubber springs and wall arrangements are of course conceivable, the above only disclosing one example of how it could be done. The basic parts of the vehicle wheel axle suspension 1 may be of any suitable kind, and it is to be understood that the description of the vehicle wheel axle suspension is kept general without describing previously known parts in detail.

Furthermore, in addition to the boogie arrangement 50 comprising two wheel pairs, there may be one or more additional wheel pairs which are running freely, not being driven. These wheel pairs have individual suspensions, separated from the vehicle wheel axle suspension of the present invention.

The vehicle wheel axle suspension 1 has been shown for a truck 48, but may of course be comprised in any suitable vehicle, preferably a heavy vehicle, such as a bus or a trailer.

An example of rubber material for the rubber springs is natural rubber with embedded metal plates, for example steel plates.

## Claims

1. A vehicle wheel axle suspension (1) having a first wheel pair side (2) and a second wheel pair side (3), the vehicle wheel axle suspension (1) comprising a first wheel axle casing (4) and a second wheel axle casing (5), which wheel axle casings (4, 5) extend between said wheel pair sides (2, 3), where, at each wheel pair side (2, 3), there is a leaf spring (6) extending between the wheel axle casings (4, 5), and at least one rubber spring (7, 8) being a part of a wheel axle casing rubber spring pair (7, 7'), each leaf spring (6) having a first end (9), a second end (10), a middle part (11), an inner longitudinal side (12) and an outer longitudinal side (13), each rubber spring (7, 8) being arranged to provide suspension between the corresponding wheel axle casing (4, 5) and the corresponding leaf spring end (9, 10), **characterized in that** the vehicle wheel axle suspension (1) comprises at least one wall arrangement (14, 15) for at least one wheel axle casing rubber spring pair (7, 7'), where each wall arrangement comprises a first wall (16, 18) and a second wall (17, 19), each wall (16, 17; 18, 19) being attached to a corresponding wheel axle casing (4, 5) and having main sides (16a, 16b, 17a, 17b; 18a, 18b, 19a, 19b) with longitudinal extensions parallel to the leaf springs' longitudinal sides (12, 13) and running between a corresponding wheel axle casing (4, 5) and a corresponding leaf spring (6) such that a main side (16a, 16b, 17a, 17b; 18a, 18b, 19a, 19b) of each wall (16, 17; 18, 19) faces a corresponding leaf spring longitudinal side (12, 13), wherein the vehicle axle suspension (1) further comprises a first longitudinal stay (20) and a second longitudinal stay (21), where the first longitudinal stay (20) runs between the first wheel axle (3) and a beam arrangement (22) positioned between, and running parallel with, the wheel axle casings (4, 5) and where the second longitudinal stay (21) runs between the second wheel axle casing (4) and the beam arrangement (22), the longitudinal stays (20, 21) being attached at opposite sides of the beam arrangement (22), each longitudinal stay (20, 21) being attached in its ends by means of suitable joints (23, 24; 25, 26) that allow pivoting movements.

2. A vehicle wheel axle suspension (1) according to claim 1, **characterized in that** at each wheel pair side (2, 3) there is a first rubber spring (7) and a second rubber spring (8).

3. A vehicle wheel axle suspension (1') according to any one of the previous claims, **characterized in that** each wall arrangement (14, 14b) is arranged at a corresponding wheel axle casing rubber spring pair (7, 7'), such that each first wall (16') and each second wall (17') runs on an outer side or an inner side of different rubber springs (7, 7') in said wheel axle casing rubber spring pair (7, 7').

4. A vehicle wheel axle suspension (1) according to any one of the claims 1-2, **characterized in that** each wall arrangement (14, 15) is arranged at a corresponding rubber spring (7, 8) such that each first wall (16, 18) and each second wall (17, 19) run on opposite sides of both the corresponding rubber spring (7, 8) and the leaf spring's corresponding end (9, 10).

5. A vehicle wheel axle suspension (1) according to claim 4, **characterized in that** each wall arrangement (14, 15) comprises a top pin (27, 28) that runs between the walls (16, 17; 18, 19) on a side of the corresponding leaf spring's end that faces away from the corresponding rubber spring, such that a maximum distance between the leaf spring's ends (9, 10) and the corresponding wheel axle casing (4, 5) is obtained.

6. A vehicle wheel axle suspension (1) according to any one of the previous claims, **characterized in that** each wall arrangement (14, 15) comprises feet (47), which feet (47) are attached to a corresponding wheel axle casing (4, 5).

7. A heavy vehicle comprising a vehicle wheel axle suspension (1) according to any one of the previous claims 1-6.

## Patentansprüche

1. Fahrzeugradachsenaufhängung (1) mit einer ersten Radpaarseite (2) und einer zweiten Radpaarseite (3), wobei die Fahrzeugradachsenaufhängung (1) ein erstes Radachsengehäuse (4) und ein zweites Radachsengehäuse (5) umfasst, wobei die Radachsengehäuse (4, 5) sich zwischen den Radpaarseiten (2, 3) erstrecken, wo es an jeder Radpaarseite (2, 3) eine Blattfeder (6) gibt, die sich zwischen den Radachsengehäusen (4, 5) erstreckt, und wenigstens eine Gummifeder (7, 8), welche Teil eines Gummifederpaars (7, 7') für das Radachsengehäuse ist, wobei jede Blattfeder (6) ein erstes Ende (9), ein zweites Ende (10), einen mittleren Abschnitt (11), eine innere Längsseite (12) und eine äußere Längsseite (13) aufweist, wobei jede Gummifeder (7, 8) dazu angeordnet ist, eine Aufhängung zwischen dem entsprechenden Radachsengehäuse (4, 5) und dem entsprechenden Blattfederende (9, 10) bereitzustellen, **dadurch gekennzeichnet, dass** die Fahrzeugradachsenaufhängung (1) wenigstens eine Wandanordnung (14, 15) für wenigstens ein Gummifederpaar (7, 7') für das Radachsengehäuse umfasst, wobei jede Wandanordnung eine erste Wand (16, 18) und eine zweite Wand (17, 19) umfasst, wobei jede Wand (16, 17; 18, 19) an einem entsprechenden Radachsengehäuse (4, 5) angebracht ist und Hauptseiten (16a, 16b, 17a, 17b; 18a, 18b, 19a, 19b) mit Längsausdehnungen parallel zu den Längsseiten (12, 13) der Blattfedern aufweist und zwischen einem entsprechenden Radachsengehäuse (4, 5) und einer entsprechenden Blattfeder (6) derart verlaufen, dass eine Hauptseite (16a, 16b, 17a, 17b; 18a, 18b, 19a, 19b) einer jeden Wand (16, 17; 18, 19) einer entsprechenden Längsseite (12, 13) der Blattfeder zugewandt ist, wobei die Fahrzeugradachsenaufhängung (1) ferner eine erste longitudinale Strebe (20) und eine zweite longitudinale Strebe (21) umfasst, wobei die erste longitudinale Strebe (20) zwischen der ersten Radachse (3) und einer Trägeranordnung (22) verläuft, die zwischen den und parallel verlaufend zu den Radaufhängungsgehäusen (4, 5) angeordnet ist, und wobei die zweite longitudinale Strebe (21) zwischen dem zweiten Radachsengehäuse (4) und der Trägeranordnung (22) verläuft, wobei die longitudinalen Streben (20, 21) an gegenüberliegenden Seiten der Trägeranordnung (22) angebracht sind, wobei jede longitudinale Strebe (20, 21) an ihren Enden durch geeignete Verbindungsmittel (23, 24; 25, 26) angebracht sind, die Schwenkbewegungen ermöglichen.

2. Fahrzeugradachsenaufhängung (1) nach Anspruch 1, **dadurch gekennzeichnet, dass** es an jeder Radpaarseite (2, 3) eine erste Gummifeder (7) und eine zweite Gummifeder (8) gibt.

3. Fahrzeugradachsenaufhängung (1) nach einem der vorhergehenden Ansprüche, **dadurch gekennzeichnet, dass** jede Wandanordnung (14, 14b) an einem entsprechenden Gummifederpaar (7, 7') für das Radachsengehäuse derart angeordnet ist, dass jede erste Wand (16') und jede zweite Wand (17') an einer äußeren Seite oder einer inneren Seite verschiedener Gummifedern (7, 7') in dem Gummifederpaar (7, 7') für das Radachsengehäuse verläuft.

4. Fahrzeugradachsenaufhängung (1) nach einem der vorhergehenden Ansprüche 1-2, **dadurch gekennzeichnet, dass** jede Wandanordnung (14, 15) an einer entsprechenden Gummifeder (7, 8) derart angeordnet ist, dass jede erste Wand (16, 18) und jede zweite Wand (17, 19) an gegenüberliegenden Seiten sowohl der entsprechenden Gummifeder (7, 8) als auch dem entsprechenden Ende (9, 10) der Blattfeder verlaufen.

5. Fahrzeugradachsenaufhängung (1) nach Anspruch 4, **dadurch gekennzeichnet, dass** jede Wandanordnung (14, 15) einen oberen Stift (27, 28) umfasst, der zwischen den Wänden (16, 17; 18, 19) an einer Seite des entsprechenden Endes der Blattfeder verläuft, das von der entsprechenden Gummifeder derart abgewandt ist, dass ein maximaler Abstand zwischen den Enden (9, 10) der Blattfedern und dem entsprechenden Radachsengehäuse (4, 5) erreicht wird.

6. Fahrzeugradachsenaufhängung (1) nach einem der vorhergehenden Ansprüche, **dadurch gekennzeichnet, dass** jede Wandanordnung (14, 15) Füße (47) aufweist, wobei die Füße (47) an einem entsprechenden Radachsengehäuse (4, 5) angebracht sind.

7. Schwerfahrzeug umfassend eine Fahrzeugradachsenaufhängung (1) nach einem der vorhergehenden Ansprüche 1-6.

## Revendications

1. Suspension d'essieu de roue de véhicule (1) ayant un premier côté de paire de roues (2) et un deuxième côté de paire de roues (3), la suspension d'essieu de roue de véhicule (1) comprenant un premier carter d'essieu de roue (4) et un deuxième carter d'essieu de roue (5), lesquels carters d'essieu de roue (4, 5) s'étendent entre lesdits côtés de paire de roues (2, 3), où, au niveau de chaque côté de paire de roues (2, 3), il y a un ressort à lames (6) s'étendant entre les carters d'essieu de roue (4, 5) et au moins un ressort en caoutchouc (7, 8) faisant partie d'une paire de ressorts en caoutchouc de carter d'essieu de roue (7, 7'), chaque ressort à lames (6) ayant une première extrémité (9), une deuxième extrémité (10), une partie médiane (11), un côté longitudinal interne (12) et un côté longitudinal externe (13), chaque ressort en caoutchouc (7, 8) étant agencé pour assurer une suspension entre le carter d'essieu de roue correspondant (4, 5) et l'extrémité de ressort à lames correspondante (9, 10), **caractérisée en ce que** la suspension d'essieu de roue de véhicule (1) comprend au moins un agencement de parois (14, 15) pour au moins une paire de ressorts en caoutchouc de carter d'essieu de roue (7, 7'), où chaque agencement de parois comprend une première paroi (16, 18) et une deuxième paroi (17, 19), chaque paroi (16, 17 ; 18, 19) étant fixée à un carter d'essieu de roue correspondant (4, 5) et ayant des côtés principaux (16a, 16b, 17a, 17b ; 18a, 18b, 19a, 19b) avec des extensions longitudinales parallèles aux côtés longitudinaux (12, 13) des ressorts à lames et s'étendant entre un carter d'essieu de roue correspondant (4, 5) et un ressort à lames correspondant (6) de sorte qu'un côté principal (16a, 16b, 17a, 17b ; 18a, 18b, 19a, 19b) de chaque paroi (16, 17 ; 18, 19) fait face à un côté longitudinal de ressort à lames correspondant (12, 13), où la suspension d'essieu de véhicule (1) comprend en outre un premier tirant longitudinal (20) et un deuxième tirant longitudinal (21), où le premier tirant longitudinal (20) s'étend entre le premier essieu de roue (3) et un agencement de poutre (22) positionné entre, et s'étendant parallèlement aux carters d'essieu de roue (4, 5) et où le deuxième tirant longitudinal (21) s'étend entre le deuxième carter d'essieu de roue (4) et l'agencement de poutre (22), les tirants longitudinaux (20, 21) étant fixés au niveau de côtés opposés de l'agencement de poutre (22), chaque tirant longitudinal (20, 21) étant fixé dans ses extrémités au moyen d'articulations appropriées (23, 24 ; 25, 26) qui permettent des mouvements de pivotement.

2. Suspension d'essieu de roue de véhicule (1) selon la revendication 1, **caractérisée en ce que**, au niveau de chaque côté de paire de roues (2, 3), il y a un premier ressort en caoutchouc (7) et un deuxième ressort en caoutchouc (8).

3. Suspension d'essieu de roue de véhicule (1') selon l'une quelconque des revendications précédentes, **caractérisée en ce que** chaque agencement de parois (14, 14b) est agencé au niveau d'une paire correspondante de ressorts en caoutchouc de carter d'essieu de roue (7, 7'), de sorte que chaque première paroi (16') et chaque deuxième paroi (17') s'étend sur un côté externe ou un côté interne de différents ressorts en caoutchouc (7, 7') dans ladite paire de ressorts en caoutchouc de carter d'essieu de roue (7, 7').

4. Suspension d'essieu de roue de véhicule (1) selon l'une quelconque des revendications 1 et 2, **caractérisée en ce que** chaque agencement de parois (14, 15) est agencé au niveau d'un ressort en caoutchouc correspondant (7, 8) de sorte que chaque première paroi (16, 18) et chaque deuxième paroi (17, 19) s'étendent sur des côtés opposés du ressort en caoutchouc correspondant (7, 8) et de l'extrémité correspondante (9, 10) du ressort à lames.

5. Suspension d'essieu de roue de véhicule (1) selon la revendication 4, **caractérisée en ce que** chaque agencement de parois (14, 15) comprend une broche supérieure (27, 28) qui s'étend entre les parois (16, 17 ; 18, 19) sur un côté de l'extrémité correspondante du ressort à lames qui est orientée à l'opposé du ressort en caoutchouc correspondant, de sorte qu'une distance maximale entre les extrémités (9, 10) du ressort à lames et le carter d'essieu de roue correspondant (4, 5) soit obtenue.

6. Suspension d'essieu de roue de véhicule (1) selon l'une quelconque des revendications précédentes, **caractérisée en ce que** chaque agencement de parois (14, 15) comprend des pieds (47), lesquels pieds (47) sont fixés à un carter d'essieu de roue correspondant (4, 5).

7. Véhicule lourd comprenant une suspension d'essieu de roue de véhicule (1) selon l'une quelconque des revendications précédentes 1 à 6.
